# EUROPÄISCHE PATENTSCHRIFT

(11) **EP 2 923 155 B1**
(45) Veröffentlichungstag und Bekanntmachung des Hinweises auf die Patenterteilung: **28.04.2021**
(21) Anmeldenummer: 13801487.3
(22) Anmeldetag: 21.11.2013
(51) Int. Cl.: F24D 11/00, C04B 28/02, C04B 103/00, C04B 111/28, F24S 60/00, F24S 20/66, F24S 60/10

(54) **GEBÄUDE MIT INTEGRIERTEM THERMISCHEN SPEICHERELEMENT SOWIE SOLARTHERMISCHE ANLAGE**
BUILDING WITH INTEGRATED THERMAL STORAGE ELEMENT, AND SOLAR THERMAL SYSTEM
BÂTIMENT DANS LEQUEL EST INTÉGRÉ UN ÉLÉMENT D'ACCUMULATION THERMIQUE ET INSTALLATION THERMO-SOLAIRE

(30) Priorität: 22.11.2012 DE 102012022828
(43) Veröffentlichungstag der Anmeldung: 30.09.2015
(73) Patentinhaber: Fraunhofer-Gesellschaft zur Förderung der angewandten Forschung e.V., 80686 München (DE)
(72) Erfinder: KRAMER, Wolfgang, 35041 Marburg (DE); HERMANN, Michael, 79194 Heuweiler (DE)
(74) Vertreter: Pfenning, Meinig & Partner mbB
(86) Internationale Anmeldenummer: PCT/EP2013/074370
(87) Internationale Veröffentlichungsnummer: WO 2014/079920

(56) Entgegenhaltungen:
- EP-A1- 0 042 935
- WO-A2-2012/127064
- DE-A1- 3 018 701
- DE-A1-102007 055 293
- US-A1- 2011 258 945

## Beschreibung

Die Erfindung betrifft ein solarthermisches Modul enthaltend mindestens einen solarthermischen Kollektor und mindestens ein thermisches Speicherelement mit mindestens einer Zuleitung und mindestens einer Ableitung für ein Wärmeträgermedium sowie einer Speichermasse mit einer Fluidverteilerstruktur. Das Speicherelement ist dabei zumindest teilweise aus einem ultrahochfesten Beton (engl. ultra high-performance concrete, UHPC) aufgebaut. Weiterhin betrifft die Erfindung ein Gebäude, in das ein solarthermisches Modul integriert ist.

Solarthermische Kollektoranlangen für die Bereitung von warmem Trinkwasser und für die Heizungsunterstützung sind heute Stand der Technik. Der jährliche Zubau in Deutschland beträgt etwa 1,2 Mio m²(Fahrplan Solarwärme, Hrsg. Bundesverband Solarwirtschaft, Juli 2012). Weltweit werden etwa 60,2 Mio m² jährlich installiert (Werner, W. und Mauthner, F., Solar Heat Worldwide, Mai 2012). Der solare Anteil an der Energieversorgung für Wärme beträgt in Deutschland aber noch weniger als 0,5 %. Auf der anderen Seite nennt die Bundesregierung aber das Ziel, bis 2020 18% der am Bruttoendenergieverbrauch aus erneuerbaren Energien bereitzustellen.

Wesentliche Gründe für einen noch immer relativ bescheidenen Anteil der Solarthermie an der Wärmeerzeugung sind neben anderen Aspekten die relativ hohen Kosten von solarthermischen Anlagen. Ein Versuch, dieses Problem zu lösen, besteht darin, die Kosten für die Komponenten der Anlagen zu senken. Hier scheint das Potenzial aufgrund der heutigen Bauweise von Kollektoren und Systemkomponenten eher begrenzt. Steigende Rohstoffpreise machen die Fortschritte bei der Kostenreduzierung auf der Fertigungsseite zunichte.

Ein weiterer wichtiger Kostentreiber ist in den Vertriebsstrukturen zu sehen. Mehrstufige Vertriebskonzepte, hohe Komplexität der Produkte mit entsprechender Anforderung an die Qualifikation der Verkaufs- und Installationsmitarbeiter, sowie ein wenig kompetitives Marktumfeld im Installateursbereich verhindern eine rasche Kostensenkung.

Ein möglicher Ansatz, die Kosten von solarthermischen Anlagen zu reduzieren, ist deshalb der Versuch, durch Integration vieler Funktionalitäten zum einen die Kosten der Komponenten bzw. des Gesamtsystems zu reduzieren und vor allem auf der Seite des Bauprozesses erhebliche Vereinfachungen in Planung und Umsetzung zu erreichen.

Die DE 10 2007 055 293 A1 offenbart eine Vorrichtung eines Flachkollektors zur dezentralen Gewinnung von Sonnenwärme, der u.a. aus einer Verbundplatte aus einer Zwischenplatte mit zwei im Abstand zueinander parallel angeordneten massiven und für gasförmige wie flüssige Medien dichten, ebenen und nur an den Rändern miteinander verbundenen und abgedichteten und in einer Richtung von einem Wärmeträgermedium vollflächig hinterströmten Außenplatten und einer porösen Füllmasse mit offenen Hohlräumen besteht und bei dem alle für die optimale Funktion eines Flachkollektors zusätzlich erforderlichen bewährten Einrichtungen zugeordnet oder an diese angeschlossen sind, wobei die Zwischenplatte aus der Füllmasse besteht und selbst oder erst zusammen mit mindestens einer Außenplatte einen starren und stabilen Verbund definierter Dicke hat und im Wesentlichen über ihre komplette Fläche einen festen Verbund mit den zwei Außenplatten herstellt und im Prinzip in ihrem gesamten Plattenquerschnitt in einer Richtung von einem Wärmeträgermedium durchströmt wird und je nach Flachkollektortyp nicht nur ein Wärmetauscher, sondern ggf. auch ein Absorber für die Sonnenstrahlen ist Dieses Dokument offenbart die Merkmale des Oberbegriffs des Anspruchs 1.

Die EP 0 042 935 A1 ist gerichtet auf einen geformten Gegenstand und ein Verbundmaterial sowie ein Verfahren zu dessen Herstellung. Der geformte Artikel besteht aus einer kohärenten Matrix, wobei die Matrix spezielle homogen angeordnete Körper, spezielle dicht gepackte Körper und spezielle kompakt geformte feste Partikel umfasst.

Die WO 2012/127064 A2 betrifft eine Heizvorrichtung mit einem plattenförmigen oder ebenen und flachen oder ein- oder mehrfach in gleicher oder entgegengesetzter Richtung gekrümmten Heizkörper aus einem hydraulisch gebundenen Material, vorzugsweise Zement, das eine hohe Packungsdichte aufweist, und mindestens einem elektrischen Widerstandsheizelement, das in das hydraulisch gebundene Material eingebettet ist.

Ausgehend hiervon war es Aufgabe der vorliegenden Erfindung, ein solarthermisches Modul mit einem thermischen Speicherelement bereitzustellen, das einfach in ein Gebäude zu integrieren ist und mit dem die typischen Funktionalitäten einer solarthermischen Anlage mit den statischen Erfordernissen eines Gebäudes vereint werden können.

Diese Aufgabe wird durch das solarthermische Modul mit den Merkmalen des Anspruchs 1 sowie das Gebäude mit den Merkmalen des Anspruchs 7 gelöst. Die weiteren abhängigen Ansprüche zeigen vorteilhafte Weiterbildung auf.

Erfindungsgemäß wird ein solarthermisches Modul bereitgestellt, enthaltend:
- mindestens ein thermisches Speicherelement mit mindestens einer Zuleitung und mindestens einer Ableitung für ein Wärmeträgermedium sowie einer Speichermasse mit einer Fluidverteilungsstruktur, wobei das Speicherelement zumindest teilweise aus einem ultrahochfesten Beton (UHPC) aufgebaut ist sowie
- mindestens einen solarthermischen Kollektor,
wobei in das Speicherelement ein Hydraulikblock integriert ist, wobei in dem Hydraulikblock Pumpen und andere Hydraulikelemente integriert sind.

Zudem wird erfindungsgemäß ein Gebäude bereitgestellt, in das ein erfindungsgemäßes solarthermisches Modul integriert ist.

Aufgrund der Verwendung von ultrahochfestem Beton kann das thermische Speicherelement in Bereichen des Gebäudes integriert werden, die besondere statische Anforderungen besitzen. Hierzu zählen beispielsweise tragende Strukturen in Gebäuden, z.B. Wände. Durch besonders optimiertes Werkstoffdesign kann der UHPC ebenfalls eine besonders hohe Wasserdampfdichtheit erreichen. Damit ist die Eignung als Wasserspeicher gegeben, ohne dass zusätzliche Maßnahmen gegen Wasserverlust ergriffen werden müssen.

Der besondere Vorteil des erfindungsgemäßen Speicherelements basiert darauf, dass das Speicherelement mit weiteren Elementen, die in solarthermischen Anlagen Verwendung finden, einfach zu integrieren ist, wobei gleichzeitig durch das Gebäude vorgegebene statische Anforderung erfüllt werden können. Durch die Verbindung dieser Funktionen entsteht so ein autarkes Modul, welches ohne größeren individuellen Planungsaufwand einfach in den Bauprozess für Gebäude integriert werden kann.

Das erfindungsgemäße Speicherelement kann dabei auf einfache Weise die folgenden Funktionen miteinander verbinden:
1. Wandlung solarer Strahlung in Wärme
2. Speicherung der Wärme im Speicherelement
3. Beheizung des Gebäudeinnenraumes, welcher an das Speicherelement grenzt
4. Dezentrale Bereitstellung von Trinkwarmwasser
5. Anbindung des Speicherelements an das Gebäudebeheizungssystem
6. Statisch tragende Funktion als Außenwandelement
7. Gebäudedämmung

Durch das erfindungsgemäße Speicherelement können im Bauprozess wesentliche Vereinfachungen und damit Kostenreduzierungen im Vergleich zur Integration einer konventionellen Solarthermieanlage realisiert werden.

Die Verwendung von keramikartigem ultrahochfestem Beton ermöglicht neue Ansätze zur Bearbeitung und damit zur Herstellung des erfindungsgemäßen Speicherelements.

Beispielsweise lassen sich durch die Gusstechnik bei Beton komplexe Formgebungsverfahren preisgünstig realisieren. Damit können Rohrleitungen, Pumpengehäuse und andere hydraulische Komponenten direkt im Betonwerkstoff ausgeformt werden. Diese Blockbauweise ist als Kunststofftechnologie zum Beispiel bei der Herstellung von Pumpenmodulen für Brennwertgasgeräte bekannt.

Ein weiterer Vorteil des Werkstoffs UHPC besteht darin, dass er für tragende und nichtragende Gebäudekomponenten gut geeignet ist. Gemäß der vorliegenden Erfindung wird UHPC in verschiedenen Designs für die jeweilige Anforderung maßgeschneidert:
UHPC als hochfester statisch tragender und wasserdampfdichter Werkstoff für die Speicherwandung UHPC, als poröse feste und wasserdurchlässige Struktur (Drainbeton) für den Transport des Wärmeträgermediums im Innern des Speichers und UHPC als geschlossenporige, hochfeste und wärmedämmende Struktur (Dämmbeton) zur Vermeidung von Wärmeverlusten.

Alle genannten UHPC-Materialdesigns werden in ein und dem selben Bauteil genutzt und zu einem in seinen Anforderungen optimal abgestimmten Speicherelement vereinigt.

Vorzugsweise übertrifft der ultrahochfeste Beton (UHPC) die Anforderung der Druckfestigkeitsklasse C 700/115 der DIN EN206-1.

Es ist weiter bevorzugt, dass die Speichermasse im Wesentlichen aus einem flüssigkeitsdurchlässigen Material besteht, das eine Porosität aufweist, die den Transport des Wärmeträgermediums durch die Poren ermöglicht, und/oder einen Fluid. Besonders geeignet ist hier Drainbeton.

Weiterhin ist es bevorzugt, dass die Speichermasse aus ultrahochfestem Beton besteht, der als Fluidverteilungsstruktur mindestens eine während der Herstellung geformte Struktur oder mindestens eine Rohrleitung zum Transport des Wärmeträgermediums aufweist.

Die Speichermasse enthält vorzugsweise mindestens ein Phasenwechselmaterial (PCM), insbesondere aus der Gruppe der Paraffine.

Das Speicherelement kann dabei sowohl drucklos als auch druckbeaufschlagt betrieben werden. Typischerweise sind Speicher mit nicht runder Grundfläche als drucklose Speicher ausgeführt, weil aufgrund der Form hohe Drücke nicht beherrschbar sind. Die Ausführung des Speicherelements mit hochfestem UHPC und materialgerechter Konstruktion, da Beton sehr viel Druckspannung aber weniger Zugspannung aushält, erlaubt aber auch bei dieser eher ungünstigen Speicherform eines Quaders mit großen Seitenflächen eine Druckbeaufschlagung.

Vorzugsweise weist das Speicherelement Dämmbeton zur Minimierung von Wärmeverlusten auf.

Besonders geeignet ist das erfindungsgemäße thermische Speicherelement für die Integration im Wohngebäude.

Vorzugsweise kann das Speicherelement mit weiteren Elementen einer solarthermischen Anlage gekoppelt sein. Hierzu zählen insbesondere solarthermische Kollektoren. Erweitert werden kann dieses System dann bevorzugt durch Wärmeverteileinrichtungen, insbesondere Flächenheizmodulen und/oder Trinkwarmwassermodulen.

Die Verbindung mit dem mindestens einen solarthermischen Kollektor und/oder der mindestens einen Wärmeverteileinrichtung erfolgt vorzugsweise durch lastaufnehmende Verbindungselemente, insbesondere Zuganker aus Edelstahl oder Glasfaser.

Bei derart gekoppelten Elementen bzw. Modulen, ist es bevorzugt, dass mindestens eine der Komponenten ausgewählt aus Speicherelement, Kollektor und Wärmeverteileinrichtung zumindest teilweise aus ultrahochfestem Beton (UHPC) aufgebaut ist.

Eine besonders vorteilhafte Ausführung der gekoppelten Elemente ergibt sich, wenn der solarthermische Kollektor integraler Bestandteil des Moduls ist. Erfindungsgemäß wird ein solches solarthermisches Modul bereitgestellt, das
- mindestens ein thermisches Speicherelement mit mindestens einer Zuleitung und mindestens einer Ableitung für ein Wärmeträgermedium sowie einer Speichermasse mit einer Fluidverteilungsstruktur, wobei das Speicherelement zumindest teilweise aus einem ultrahochfesten Beton (UHPC) aufgebaut ist sowie
- mindestens einen solarthermischen Kollektor
aufweist, wobei in das Speicherelement ein Hydraulikblock integriert ist, wobei in dem Hydraulikblock Pumpen und andere Hydraulikelemente integriert sind.

Dabei ist bevorzugt, dass das Speicherelement eine statisch tragende Funktion besitzt oder Teil eines Vorhangfassadenelements ist.

Es ist bevorzugt, dass das solarthermische Modul zusätzlich mindestens eine Wärmeverteileinrichtung aufweist, die ausgewählt ist aus der Gruppe bestehend aus Flächenheizung, Trinkwarmwassermodul oder Kombinationen dieser funktionalen Elemente.

Eine weitere bevorzugte Ausführungsform sieht vor, dass das solarthermische Modul ein Pumpenmodul mit mindestens einer Pumpe und/oder Hydraulikelement sowie integrierten Ventilen enthält. Diese können vorzugsweise zumindest teilweise aus UHPC gefertigt sein.

Das solarthermische Modul kann aus den einzelnen Elementen zusammengebaut werden und dann als eine Einheit in ein Gebäude integriert werden. Dies ist sehr vorteilhaft für den Bauprozess des Gebäudes, da aufwändige Montageschritte für das solarthermische Modul auf der Baustelle entfallen. Vielmehr wird das solarthermische Modul als Gesamtheit zur Baustelle geliefert und kann dort einfach in das Gebäude verbaut werden.

Anhand der nachfolgenden, nicht maßstäblichen, Figur soll der erfindungsgemäße Gegenstand näher erläutert werden, ohne diesen auf die hier gezeigten spezifischen Ausführungsformen einschränken zu wollen.

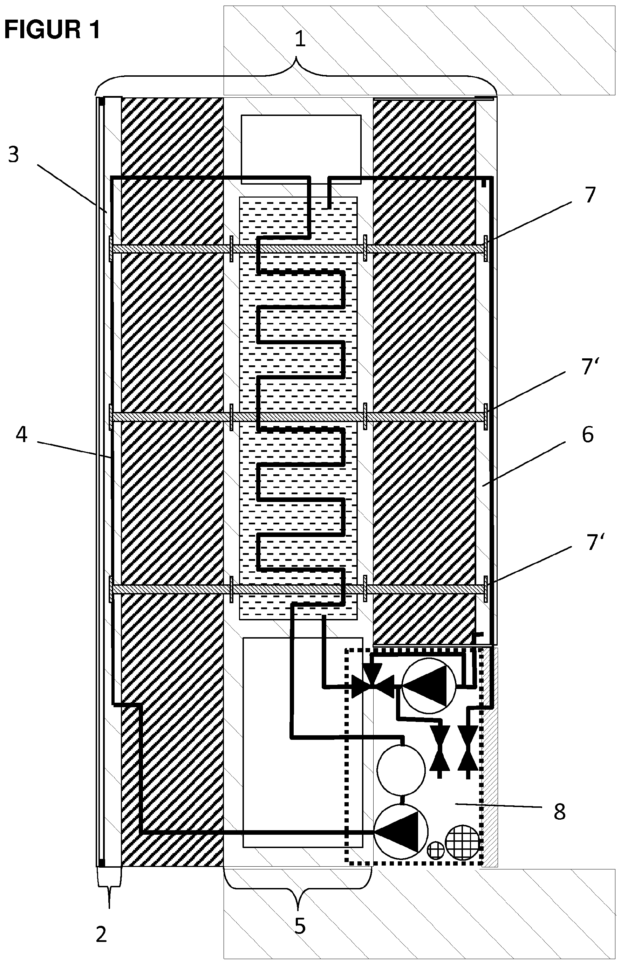

Fig. 1 zeigt ein Element 1, das aus drei Elementen aus UHPC sandwichartig aufgebaut ist. Das außenliegende UHPC-Element 2 stellt den solarthermischen Kollektor dar. Der Absorber 3 besteht aus UHPC, wobei die flüssigkeitsführenden Kanäle 4 direkt im Beton ausgeführt sind. Die Herstellung dieser Kanäle 4 können beispielsweise durch ein Gussverfahren hergestellt werden, bei dem der Kollektor aus zwei Halbschalen aufgebaut ist, wobei zunächst die eine Halbschale mit den Kanälen gegossen wird und diese nach Aushärtung am zweiten Guss zum kompletten Absorber geformt wird. Eine weitere Möglichkeit besteht darin, die Kanäle 4 zunächst als Textilgewebestruktur 1 einzubringen und während des Aushärteprozesses durch hydraulische oder pneumatische Weitung zur eigentlichen Kanalstruktur auszuformen. Für den solarthermischen Kollektor ist es möglich, dass der ultrahochfeste Beton im Sputterverfahren mit einer selektiven Absorberschicht versehen wird.

Das mittlere UHPC-Element 5 hat die Aufgabe der Wärmespeicherung im Sinne eines Kurzzeitspeichers. Die dampfdiffusionsdichte Eigenschaft von UHPC erlaubt die Herstellung eines Speichers ohne Einbringen weiterer Werkstoffe. Die eigentliche thermische Speichermasse besteht hier aus Beton und Wasser. Besonders gut geeignet ist hier Drainbeton aufgrund seiner sehr hohen Wasserdurchlässigkeit. Der Vorteil der Ausführung mit Drainbeton ist die statisch hohe Belastbarkeit verbunden mit den guten Wärmeübertragungseigenschaften zum Wärmeträgermedium sowie die hohe thermische Speicherfähigkeit der Speichermediumskombination Beton/Wasser. Durch die Einbringung von Phasenwechselmaterialien kann eine weitere Verbesserung der Wärmespeicherkapazität realisiert werden.

Für das mittlere UHPC-Element können in gleicher Weise wie für den solarthermischen Kollektor Flüssigkeitskanäle geschaffen werden. Alternativ können Flüssigkeitskanäle auch durch Einbringung von Rohrleitung im Beton erfolgen.

Das gebäudeinnere UHPC-Element 6 übernimmt die Funktion einer Wandheizung. Auch hier können Flüssigkeitskanäle analog wie beim solarthermischen Kollektor eingebracht werden.

Zwischen den 3 UHPC-Elementen 2, 5, 6 wird Dämmmaterial eingebracht, welches die Aufgabe der Gebäudedämmung übernimmt. Aus statischen Gründen werden die UHPC-Elemente 2, 5, 6 über lastaufnehmende Verbindungselemente 7, 7' und 7" verbunden. Hierbei handelt es sich bevorzugt um Zuganker, die aus Edelstahl oder Glasfaser bestehen können.

Wesentlicher Bestandteil des erfindungsgemäßen Speicherelements ist die Integration von Pumpen und Hydraulik im Speicherelement selbst. Hierfür wird ein Hydraulikblock 8 integriert, in dem Pumpen und andere Hydraulikelemente integriert sind. Dadurch entsteht zumindest bezüglich des Solarkreises ein autarkes System mit entsprechenden Vorteilen bei Planung, Montage und Inbetriebnahme.

Jedes Speicherelement kann Anschlussmöglichkeiten für eine konventionelle Nachheizung aufweisen, sodass bei nicht ausreichender Wärmeversorgung durch den solarthermischen Kollektor konventionell nachgeheizt werden kann und Wärme zwischen verschiedenen Speicherelementen verschoben werden kann.

Anstelle der Funktionalität der Beheizung des Gebäudes ist es ebenso möglich, alternativ das solarthermische Modul mit einer Einrichtung zur dezentralen Erzeugung von Trinkwarmwasser auszustatten. Mit Hilfe eines Wärmetauschers wird dann Trinkwarmwasser in der notwendigen Menge erwärmt. Dieses dezentrale Frischwasserkonzept erlaubt den Verzicht auf Zirkulationsleitung im Trinkwarmwassernetz, was erhebliche Vorteile bezüglich der Hygieneaspekte mit sich bringt. Eine Desinfektion der Zirkulationsleitung durch hohe Trinkwassertemperaturen ist somit nicht länger erforderlich. Daher kann mit wesentlich geringeren Warmwassertemperaturen gearbeitet werden, was sich positiv auf die Erträge des solarthermischen Moduls und die Effizienz der gesamten Heizungsanlage auswirkt.

Die in der Figur dargestellten Module sind über ein Bussystem informationstechnisch miteinander verbunden. Hierdurch wird es möglich, Pumpen, Ventile und andere Komponenten zentral zu regeln.

Das mittlere UHPC-Element 5 kann dabei eine statisch tragende Funktion übernehmen, aber auch im Sinne eines Vorhangfassadenelementes genutzt werden.

## Patentansprüche

1. Solarthermisches Modul (1) enthaltend
- mindestens ein thermisches Speicherelement (5) mit mindestens einer Zuleitung und mindestens einer Ableitung für ein Wärmeträgermedium sowie einer Speichermasse mit einer Fluidverteilungsstruktur, wobei das Speicherelement zumindest teilweise aus einem ultrahochfesten Beton aufgebaut ist sowie
- mindestens einen solarthermischen Kollektor (2),
**dadurch gekennzeichnet, dass** in das Speicherelement (5) ein Hydraulikblock (8) integriert ist,
wobei in dem Hydraulikblock (8) Pumpen und andere Hydraulikelemente integriert sind.

2. Solarthermisches Modul (1) nach Anspruch 1,
**dadurch gekennzeichnet, dass** das Speicherelement (5) eine statisch tragende Funktion besitzt oder Teil eines Vorhangfassadenelements ist.

3. Solarthermisches Modul (1) nach Anspruch 1 oder 2, **dadurch gekennzeichnet, dass** das solarthermische Modul (1) zusätzlich mindestens eine Wärmeverteileinrichtung (6) ausgewählt aus der Gruppe bestehend aus Flächenheizung, Trinkwarmwassermodul oder Kombinationen hiervon aufweist.

4. Solarthermisches Modul (1) nach Anspruch 1 bis 3, **dadurch gekennzeichnet, dass** die Pumpen und/oder Hydraulikelemente (8) zumindest teilweise aus ultrahochfestem Beton aufgebaut sind.

5. Solarthermisches Modul (1) nach einem der Ansprüche 1 bis 4,
**dadurch gekennzeichnet, dass** die zusätzlich zum mindestens einen thermischen Speicherelement vorhandenen Komponenten des solarthermischen Moduls (1) zumindest teilweise aus ultrahochfestem Beton aufgebaut sind.

6. Solarthermisches Modul (1) nach einem der Ansprüche 1 bis 5,
**dadurch gekennzeichnet, dass** das solarthermische Modul (1) als eine Gesamteinheit in ein Gebäude integrierbar ist.

7. Gebäude, insbesondere Wohngebäude, in das ein solarthermisches Modul (1) gemäß einem der Ansprüche 1 bis 6 integriert ist.

8. Gebäude nach Anspruch 7, **dadurch gekennzeichnet, dass** der ultrahochfeste Beton die Anforderungen der Druckfestigkeitsklasse C 100/115 der DIN EN 206-1 übertrifft.

9. Gebäude nach einem der Ansprüche 7 oder 8, **dadurch gekennzeichnet, dass** die Speichermasse aus
- einem flüssigkeitsdurchlässigen Material, das eine Porosität aufweist, die den Transport des Wärmeträgermediums durch die Poren ermöglicht, insbesondere Drainbeton, und/oder
- einem Fluid
besteht oder diese im Wesentlichen enthält.

10. Gebäude nach einem der Ansprüche 7 bis 9, **dadurch gekennzeichnet, dass** die Speichermasse aus ultrahochfestem Beton besteht, der als Fluidverteilungsstruktur mindestens eine während der Herstellung geformte Struktur oder mindestens eine Rohrleitung zum Transport des Wärmeträgermediums aufweist.

11. Gebäude nach mindestens einem der Ansprüche 7 bis 10, **dadurch gekennzeichnet, dass** die Speichermasse mindestens ein Phasenwechselmaterial enthält, insbesondere aus der Gruppe der Paraffine.

12. Gebäude nach einem der Ansprüche 7 bis 11, **dadurch gekennzeichnet, dass** das Speicherelement (5) drucklos oder druckbeaufschlagt betreibbar ist.

13. Gebäude nach einem der Ansprüche 7 bis 12, **dadurch gekennzeichnet, dass** das Speicherelement (5) Dämmbeton zur Minimierung von Wärmeverlusten aufweist.

14. Gebäude nach mindestens einem der Ansprüche 7 bis 13, **dadurch gekennzeichnet, dass** das Speicherelement (5) mit dem mindestens eine solarthermischen Kollektor (2) und/oder mit mindestens einer Wärmeverteileinrichtung (6), insbesondere einem Flächenheizmodul und/oder einem Trinkwarmwassermodul verbunden ist, wobei die Verbindung des Speicherelementes bevorzugt mit dem mindestens einen solarthermischen Kollektor (2) und/oder der mindestens einer Wärmeverteileinrichtung (6) durch lastaufnehmende Verbindungselemente (7, 7', 7"), insbesondere Zuganker aus Edelstahl oder Glasfasern, erfolgt.

15. Gebäude nach Anspruch 14, **dadurch gekennzeichnet, dass** mindestens eine der Komponenten ausgewählt aus Kollektor (2) und Wärmeverteileinrichtung (6) zumindest teilweise aus ultrahochfestem Beton aufgebaut ist.

## Claims

1. A solar-thermal module (1) containing
- at least one thermal storage element (5) with at least one feed line and at least one discharge line for a heat transfer medium as well as a storage mass with a fluid-distributing structure, the storage element being constructed at least partially from an ultra-high-strength concrete, as well as
- at least one solar-thermal collector (2),
**characterized in that** a hydraulic block (8) is integrated into the storage element (5),
with pumps and other hydraulic elements being integrated in the hydraulic block (8).

2. The solar-thermal module (1) according to claim 1,
**characterized in that** the storage element (5) has a static load-bearing function or is part of a curtain façade element.

3. The solar-thermal module (1) according to claim 1 or 2, **characterized in that** the solar-thermal module (1) additionally has at least one heat-distributing means (6) selected from the group consisting of panel heater, potable hot water module, or combinations thereof.

4. The solar-thermal module (1) according to claim 1 to 3, **characterized in that** the pumps and/or hydraulic elements (8) are constructed at least partially from ultra-high-strength concrete.

5. The solar-thermal module (1) according to one of claims 1 to 4, **characterized in that** the components of the solar-thermal module (1) provided in addition to the at least one thermal storage element are constructed at least in part from ultra-high-strength concrete.

6. The solar-thermal module (1) according to one of claims 1 to 5, **characterized in that** the solar-thermal module (1) is integratable as a complete unit into a building.

7. A building, in particular a residential building, in which a solar-thermal module (1) according to one of claims 1 to 6 is integrated.

8. The building according to claim 7, **characterized in that** the ultra-high-strength concrete surpasses the requirements of compressive strength class C 100/115 according to DIN EN 206-1.

9. The building according to one of claims 7 or 8, **characterized in that** the storage mass consists of
- a liquid-permeable material that has a porosity allowing the heat transfer medium to be transported through the pores, in particular pervious concrete, and/or
- a fluid
or contains these primarily.

10. The building according to one of claims 7 to 9, **characterized in that** the storage mass consists of ultra-high-strength concrete which, as fluid-distributing structure, has at least one structure formed during the production or at least one pipeline for transporting the heat transfer medium.

11. The building according to at least one of claims 7 to 10, **characterized in that** the storage mass contains at least one phase-change material, in particular from the group of paraffins.

12. The building according to one of claims 7 to 11, **characterized in that** the storage element (5) is operable unpressurized or pressurized.

13. The building according to one of claims 7 to 12, **characterized in that** the storage element (5) comprises insulating concrete for minimizing heat losses.

14. The building according to at least one of claims 7 to 13, **characterized in that** the storage element (5) is connected to the at least one solar-thermal collector (2) and/or to at least one heat-distributing means (6), in particular a panel heating module and/or a potable hot water module, the connection of the storage element to the at least one solar-thermal collector (2) and/or the at least one heat-distributing means (6) being achieved preferably by load-bearing connection elements (7, 7', 7"), in particular tie rods made of stainless steel or glass fibers.

15. The building according to claim 14, **characterized in that** at least one of the components selected from collector (2) and heat-distributing means (6) is constructed at least partially from ultra-high-strength concrete.

## Revendications

1. Module héliothermique (1) contenant
- au moins un élément d'accumulation thermique (5) avec au moins une conduite d'entrée et au moins une conduite de sortie pour un milieu caloporteur ainsi qu'une substance accumulant de la chaleur dotée d'une structure de distribution des fluides, l'élément d'accumulation étant au moins partiellement construit avec un béton hautes performances, ainsi
- qu'au moins un collecteur héliothermique (2),
**caractérisé en ce qu'**un bloc hydraulique (8) est intégré dans l'élément d'accumulation (5),
des pompes et d'autres éléments hydrauliques étant intégrés dans le bloc hydraulique (8).

2. Module héliothermique (1) selon la revendication 1,
**caractérisé en ce que** l'élément d'accumulation (5) possède une fonction de portance statique ou fait partie d'un élément de mur-rideau.

3. Module héliothermique (1) selon la revendication 1 ou 2, **caractérisé en ce que** le module héliothermique (1) présente en outre au moins un dispositif de distribution thermique (6) choisi dans le groupe constitué d'un chauffage de surface, d'un module d'eau chaude potable ou de combinaison de ceux-ci.

4. Module héliothermique (1) selon les revendications 1 à 3, **caractérisé en ce que** les pompes, et/ou éléments hydrauliques (8) sont construits au moins partiellement à base de béton hautes performances.

5. Module héliothermique (1) selon l'une des revendications 1 à 4, **caractérisé en ce que** le composant du module héliothermique (1) présent de manière complémentaire à l'au moins un élément d'accumulation thermique est construit au moins partiellement à base de béton hautes performances.

6. Module héliothermique (1) selon l'une des revendications 1 à 5, **caractérisé en ce que** le module héliothermique (1) peut être intégré dans un bâtiment en tant qu'unité complète.

7. Bâtiment, notamment bâtiment résidentiel, dans lequel un module héliothermique (1) selon l'une des revendications 1 à 6 est intégré.

8. Bâtiment selon la revendication 7, **caractérisé en ce que** le béton hautes performances correspond largement aux exigences de la classe de résistance à la compression C 100/115 de la norme DIN EN 206-1.

9. Bâtiment selon l'une des revendications 7 ou 8, **caractérisé en ce que** la substance accumulant de la chaleur est constituée
- d'un matériau perméable aux fluides, qui présente une porosité qui permet le transport du milieu caloporteur à travers les pores, notamment du béton drainant, et/ou
- un fluide,
ou contient essentiellement ceux-ci.

10. Bâtiment selon l'une des revendications 7 à 9, **caractérisé en ce que** la substance accumulant de la chaleur est constituée de béton hautes performances, qui présente en tant que structure de distribution des fluides au moins une structure formée pendant la fabrication ou au moins une conduite tubulaire pour le transport du milieu caloporteur.

11. Bâtiment selon au moins l'une des revendications 7 à 10, **caractérisé en ce que** la substance accumulant de la chaleur contient au moins un matériau à changement de phase, notamment du groupe des paraffines.

12. Bâtiment selon l'une des revendications 7 à 11, **caractérisé en ce que** l'élément d'accumulation (5) est utilisable sans pression ou soumis à une pression.

13. Bâtiment selon l'une des revendications 7 à 12, **caractérisé en ce que** l'élément d'accumulation (5) présente du béton isolant pour minimiser les déperditions de chaleur.

14. Bâtiment selon au moins l'une des revendications 7 à 13, **caractérisé en ce que** l'élément d'accumulation (5) est relié avec l'au moins un collecteur héliothermique (2), et/ou avec au moins un dispositif de distribution de la chaleur (6), notamment un module de chauffage de surface, et/ou un module d'eau chaude potable, la liaison de l'élément d'accumulation ayant de préférence lieu avec l'au moins un collecteur héliothermique (2), et/ou l'au moins un dispositif de distribution de la chaleur (6) par des éléments de liaison (7, 7', 7") porteurs, notamment des tirants en acier inoxydable ou en fibres de verre.

15. Bâtiment selon la revendication 14, **caractérisé en ce qu'**au moins un des composants choisis parmi le collecteur (2) et le dispositif de distribution de la chaleur (6) est construit au moins partiellement en béton hautes performances.
